# EUROPEAN PATENT SPECIFICATION

(11) **EP 3 800 026 B1**
(45) Date of publication and mention of the grant of the patent: **13.07.2022**
(21) Application number: 20189867.3
(22) Date of filing: 06.08.2020
(51) Int. Cl.: A43D 25/18, A43D 25/20, A43D 999/00, B29C 35/16, B30B 5/02, B30B 11/00, F28D 1/06, B29C 43/12, B29C 49/64, B29C 49/66, B29C 51/42, B29L 31/50, F28D 21/00

(54) **METHOD AND DEVICE FOR COOLING SEMI-FINISHED PRODUCTS IN THE FIELD OF THERMO-FORMING AND/OR THERMO-ADHESIVE BONDING OF SAID SEMI-FINISHED PRODUCTS**
VERFAHREN UND VORRICHTUNG ZUM KÜHLEN VON HALBFERTIGEN PRODUKTEN IM BEREICH DER THERMO-FORMUNG UND / ODER THERMO-KLEBENDEN VERBINDUNG DIESER HALBFERTIGEN PRODUKTE
PROCÉDÉ ET DISPOSITIF DE REFROIDISSEMENT DE PRODUITS SEMI-FINIS DANS LE DOMAINE DU THERMO-FORMAGE ET / OU DU COLLAGE THERMO-ADHÉSIF DESDITS PRODUITS SEMI-FINIS

(30) Priority: 04.09.2019 IT 201900015563
(43) Date of publication of application: 07.04.2021
(73) Proprietor: MACPI S.p.A. PRESSING DIVISION, 25036 Palazzolo Sull'Oglio (Brescia) (IT)
(72) Inventor: CARTABBIA, Giovanni, 25036 PALAZZOLO SULL'OGLIO (BS) (IT); CARTABBIA, Paolo, 25036 PALAZZOLO SULL'OGLIO (BS) (IT)
(74) Representative: PGA S.p.A.

(56) References cited:
- JP-A- H02 182 157
- US-A1- 2014 138 881
- US-A1- 2017 129 200

## Description

### Field of the finding

The object of the present invention is a method and a device for cooling semi-finished products in the field of thermo-forming and/or thermo-adhesive bonding of semi-finished products. Another object of the present invention is an apparatus and a process for thermo-forming and/or thermo-adhesive bonding of semi-finished products. In particular, the present invention relates to the semi-finished products provided with one or more thermo-plastic or thermo-adhesive elements and aimed for attaining articles and/or accessories or parts thereof, in which said semi-finished products are optionally flexible.

### Definitions

In the present description and in the enclosed claims, with the term "flexible semi-finished product" it is intended a semi-finished product formed by threads and/or fibers of woven or nonwoven type or a sheet or a film obtained in another manner. A nonwoven fabric is a product similar to a woven fabric but obtained with processes different from weaving. By way of a non-exhaustive example, the semi-finished product is a fabric piece, a bag, a sock/stocking.

Among the articles/accessories attainable with the present invention, the following are included by way of a non-limiting example: clothing articles or parts thereof (e.g. gloves, socks/stockings, elements for jackets, pants, etc.), also of technical/sport type, medical articles (containment or orthopedic braces), accessories (bags, backpacks, trolleys, suitcases, etc.), coverings of various type, e.g. for furnishings or for vehicles, and socks/stockings of various type (also of sport or orthopedic type).

In the present description and in the enclosed claims, with the term "thermo-plastic or thermo-adhesive element" it is intended an element comprising thermoplastic polymers, i.e. polymers formed by linear chains or chains with few branches, not connected to each other. It is sufficient therefore to increase the temperature in order to bring them to a viscous state and hence be able to form them. Thermoplastic or thermo-adhesive elements have the capacity of modifying their own structure at a specific temperature (usually comprised between 60°C and 180°C), and hence melting once such temperature is reached and cross-linking once cooled. Examples of "thermo-plastic or thermo-adhesive" elements are yarns, layers, drops of thermo-plastic or thermo-adhesive material.

In the present description and in the enclosed claims, with the term "casing or rigid element" it is intended an element which substantially is not deformed under the action of the pressure differences between outside and inside, typical of the method according to the invention.

### Background of the finding

In such context, the document US2017/129200 (Nike Inc.) is for example known which illustrates the thermoforming of clothing articles, such as footwear, starting from textile manufactured item. In particular, US2017/129200 describes the thermoforming executed by using a bag in which a vacuum is made in order to exert pressure on a manufactured item comprising thermoplastic material while it is heated in a heating station and then cooled in a cooling station. The bag with the manufactured item is hung while it is transported. The cooling station comprises an air blade or a cooled chamber that uses a coolant.

The Applicant has observed that the processes and the apparatuses of known type, like that described above, can be improved with regard to various aspects, especially regarding the mode and the devices used for cooling the semi-finished products and for determining the stabilization of the thermo-plastic and/or thermo-adhesive materials.

The Applicant has observed that the known cooling devices are not very effective nor are they efficient from an energy standpoint.

The Applicant has also observed that the known cooling devices which employ coolants are complex, costly and bulky.

The Applicant has also observed that the processes and the apparatuses of known type for thermo-forming and/or thermo-adhesive bonding of semi-finished products are unable to produce high quality manufactured items, also due to the modes with which the cooling is executed, and the stabilization of the portions provided with the thermo-plastic and/or thermo-adhesive materials.

### Summary

In such context, the Applicant has therefore set the objective of proposing a method and a device for cooling semi-finished products in the field of thermo-forming and/or thermo-adhesive bonding of said semi-finished products which are capable of overcoming the above-indicated drawbacks.

In particular, the Applicant has set the objective of proposing a method and a device which allow effectively and efficiently cooling the semi-finished products after these have been heated, in order to determine the at least partial melting of their thermo-plastic and/or thermo-adhesive portions, so as to obtain the cross-linking of said thermo-plastic and/or thermo-adhesive portions and the stabilization of such semi-finished products.

The Applicant has also set the objective of proposing a method for cooling semi-finished products which is simple, efficient and inexpensive.

The Applicant has also set the objective of proposing a device for cooling semi-finished products which is compact, structurally simple and relatively inexpensive to make.

The Applicant has also set the objective of proposing an apparatus and a process for thermo-forming and/or thermo-adhesive bonding of semi-finished products provided with thermo-plastic or thermo-adhesive elements which allow obtaining quality articles and/or accessories.

The Applicant has found that the above-listed objects and still others can be substantially attained by exploiting the expansion and the cooling of the gas within a container or casing configured for containing a semi-finished product that is previously heated.

In particular, the Applicant has found that the abovementioned objects and still others can be substantially achieved by a method and by a device according to one or more of the enclosed claims and/or according to one or more of the following aspects.

According to an independent aspect, the present invention regards a device for cooling semi-finished products in the field of thermo-forming and/or thermo-adhesive bonding of said semi-finished products.

The device comprises:
a rigid casing, e.g. metallic, with at least one inlet and at least one outlet, in which the inlet is configured to allow the inlet of a gas at a first pressure, in which the outlet is configured to allow the outlet of the gas at a second pressure lower than the first pressure;
an auxiliary casing impermeable to said gas and placed within the rigid casing; in which a first volume is delimited between the rigid casing and the auxiliary casing;
in which a second volume is delimited within the auxiliary casing; in which the inlet and the outlet are in fluid communication with the first volume; in which the auxiliary casing is configured for containing a semi-finished product comprising at least one thermo-plastic or thermo-adhesive element in an at least partially molten state;
control devices operationally coupled to the inlet and to the outlet and configured for executing the following procedure:
   introducing the gas at the first pressure through the inlet and discharging said gas at the second pressure through the outlet in order to generate an expansion and a cooling of the gas contained within the first volume, to cool the auxiliary casing and the semi-finished product and to determine the cross-linking of the thermo-plastic or thermo-adhesive element.

According to an independent aspect, the present invention regards a method for cooling semi-finished products in the field of thermo-forming and/or thermo-adhesive bonding of said semi-finished products.

The method comprises:
▪ placing a semi-finished product comprising at least one thermo-plastic or thermo-adhesive element in an at least partially molten state in an auxiliary casing in turn placed in a rigid casing; in which the auxiliary casing is gas impermeable; in which a first volume is delimited between the rigid casing and the auxiliary casing; in which a second volume is delimited within the auxiliary casing;
▪ introducing a gas at a first pressure through an inlet into first volume and discharging said gas at a second pressure through an outlet from the first volume, in which the second pressure is lower than the first pressure, in order to generate an expansion and a cooling of the gas contained within the first volume, to cool the auxiliary casing and the semi-finished product and to determine a cross-linking of the thermo-plastic or thermo-adhesive element.

The Applicant has first of all verified that the method and the device according to the present invention allow cooling the semi-finished products in a simple and effective manner.

The Applicant has in particular verified that the cooling of the gas obtained by means of a simple physical principle allows cooling the semi-finished product in an efficient and uniform manner.

The Applicant has also verified that the device according to the invention is structurally simple (certainly much more than a refrigerator) and therefore also reliable, requiring easy maintenance and relatively inexpensive.

The Applicant has also verified that the device according to the invention has little bulk and therefore is easily installable in settings and on apparatuses dedicated for the thermo-forming and/or thermo-adhesive bonding of semi-finished products. Further aspects of the present invention are listed hereinbelow.

In one aspect, introducing the gas at the first pressure through the inlet and discharging the gas at the second pressure through the outlet are operations executed simultaneously and continuously.

In one aspect, the auxiliary casing is a bag comprising a flexible membrane.

In one aspect, the bag is reusable for a plurality of cooling cycles.

In one aspect, the first volume is (or it is provided to maintain the first volume) at a third pressure equal to the difference between the first pressure and the second pressure.

In one aspect, the second volume is (or it is provided to maintain the second volume) at a fourth pressure lower than the third pressure so as to press the bag against the semi-finished product.

In one aspect, the procedure comprises (or provision is made for): closing the inlet and the outlet to maintain said third pressure in the first volume and continuing to press the bag against the semi-finished product.

In one aspect, the membrane is elastic, optionally made of rubber, so as to perfectly adhere to the semi-finished product.

In one aspect, the membrane is made of plastic.

In one aspect, the membrane is made of a waterproof fabric.

The Applicant has verified that, by employing a flexible membrane, the method and the device according to the present invention allow both cooling the semi-finished product and simultaneously exerting a pressure on the semi-finished product in order to stabilize the shape thereof. In this manner it is also possible to prevent the use of disposable bags (throwaway), as instead occurs in the prior art US2017/129200, and this involves a savings and a drastic reduction of waste to be disposed of.

In one aspect, the semi-finished product is rigid. The bag is pressed against the semi-finished product, which is strong and is not deformed.

In one aspect, the semi-finished product is flexible.

In one aspect, the semi-finished product is a fabric piece, a sock/stocking, an open or closed tubular body, a bag.

In one aspect, the semi-finished product is a fabric or a nonwoven fabric.

In one aspect, the semi-finished product comprises one or more layers.

In one aspect, the apparatus comprises a rigid shape and the semi-finished product is placed on said rigid shape. In one aspect, it is provided to place the semi-finished product on a rigid shape before placing the semi-finished product and the rigid shape in the auxiliary casing. The bag is pressed against the semi-finished product which in turn presses against the rigid shape and is not deformed. In one aspect, said at least one thermo-plastic or thermo-adhesive element comprises: yarns and/or layers and/or drops thermo-plastic or thermo-adhesive material.

In one aspect, a pressurized gas source is connected or connectable to the inlet or the inlet is connected or connectable to a pressurized gas source.

In one aspect, the pressurized gas source is a compressor and/or a pressurized gas tank.

In one aspect, the gas is air.

In one aspect, the device comprises a pressure regulator operationally coupled to the inlet.

In one aspect, the device comprises a pressure regulator operationally coupled to the outlet.

In one aspect, the rigid casing has an auxiliary outlet, optionally connected to a suction unit, e.g. a Venturi suction unit.

In one aspect, an auxiliary inlet is communicating with the second volume and is configured to allow the inlet of the gas at a pressure equal to or greater than the third pressure.

In one aspect, the control devices are operationally coupled to said auxiliary outlet and/or to said auxiliary inlet and the procedure comprises: opening the auxiliary outlet and/or the auxiliary inlet to cause the detachment of the bag from the semi-finished product.

In one aspect, it is provided to close the inlet and optionally also the outlet and to open an auxiliary outlet of the rigid casing and/or an auxiliary inlet communicating with the second volume to cause the detachment of the bag from the semi-finished product.

In one aspect, it is provided to remove the semi-finished product, with the possible rigid shape, from the bag once the cooling is terminated.

In one aspect, the rigid casing has an access opening.

In one aspect, one edge of the auxiliary casing is constrained to an edge of said access opening.

In one aspect, the rigid casing has a cup-like shape.

In one aspect, the rigid casing comprises a cover configured for closing the access opening.

In one aspect, the rigid casing and the cover gas-tight close the first volume and the second volume.

In one aspect, the cover comprises a support for the semi-finished product configured for being placed in the second volume when the cover closes the access opening.

In one aspect, the rigid shape is constrained or constrainable to the support of the cover.

In one aspect, the first pressure is comprised between 1 bar and 10 bar, optionally between 2 bar and 4 bar.

In one aspect, the second pressure is comprised between 0.5 bar and 3 bar, optionally between 1 bar and 2 bar.

In one aspect, the third pressure is comprised between 0.5 bar and 4 bar, optionally between 0.5 bar and 2 bar.

In one aspect, a flow rate of the gas through the inlet and the outlet is comprised between 20 L/min and 100 L/min, optionally between 25 L/min and 50 L/min.

In one aspect, the fourth pressure is the ambient or atmospheric pressure.

In one aspect, it is provided to set and/or regulate the third pressure and/or the flow rate of the gas in order to regulate the cooling.

In one aspect, the gas contained within the first volume is brought to a temperature comprised between 2 °C and 20 °C, optionally between 5 °C and 15 °C.

In one aspect, it is provided to introduce the gas at the first pressure through the inlet and discharge the gas at the second pressure through the outlet for a cooling time comprised between 10 s and 150 s, optionally between 40 s and 80 s.

In one aspect, it is provided to close the inlet and the outlet and to leave the semi-finished product in the bag under pressure of a stay time comprised between 10 s and 150 s, optionally between 40 s and 80 s.

In one aspect, the present invention regards an apparatus for thermo-forming and/or thermo-adhesive bonding of semi-finished products, comprising at least one device according to one or more of the preceding aspects.

In one aspect, said apparatus, comprises:
▪ optionally, a loading/unloading station;
▪ at least one oven with at least one heating chamber configured for containing at least one semi-finished product comprising at least one thermo-plastic or thermo-adhesive element;
▪ at least one device according to one or more of the preceding aspects;
▪ optionally, a conveyor comprising at least one support head configured for supporting at least the semi-finished product comprising at least one thermo-plastic or thermo-adhesive element.

In one aspect, the conveyor is movable with respect to the loading/unloading station, to said at least one oven, to said at least one device to arrange in sequence the semi-finished product in the loading/unloading station, in the heating chamber of the oven, in the auxiliary casing of the device.

In one aspect, the present invention regards a process for thermo-forming and/or thermo-adhesive bonding of semi-finished products, comprising the method according to one or more of the preceding aspects.

In one aspect, said process comprises:
▪ preparing at least one semi-finished product comprising at least one thermo-plastic or thermo-adhesive element;
▪ heating the semi-finished product in an oven until at least partial melting of the thermo-plastic or thermo-adhesive element has been achieved;
▪ cooling the semi-finished product according to the method of one or more of the preceding aspects.

In one aspect, the oven comprises heating devices comprising pipes with nozzles connected to a vapor generator and operationally active in the heating chamber in order to introduce vapor or a mixture of overheated air and vapor in said heating chamber.

Further characteristics and advantages will be clearer from the detailed description of a preferred but not exclusive embodiment of a device and of a method for cooling semi-finished products in the field of thermo-forming and/or thermo-adhesive bonding of said semi-finished products in accordance with the present invention.

### Description of the drawings

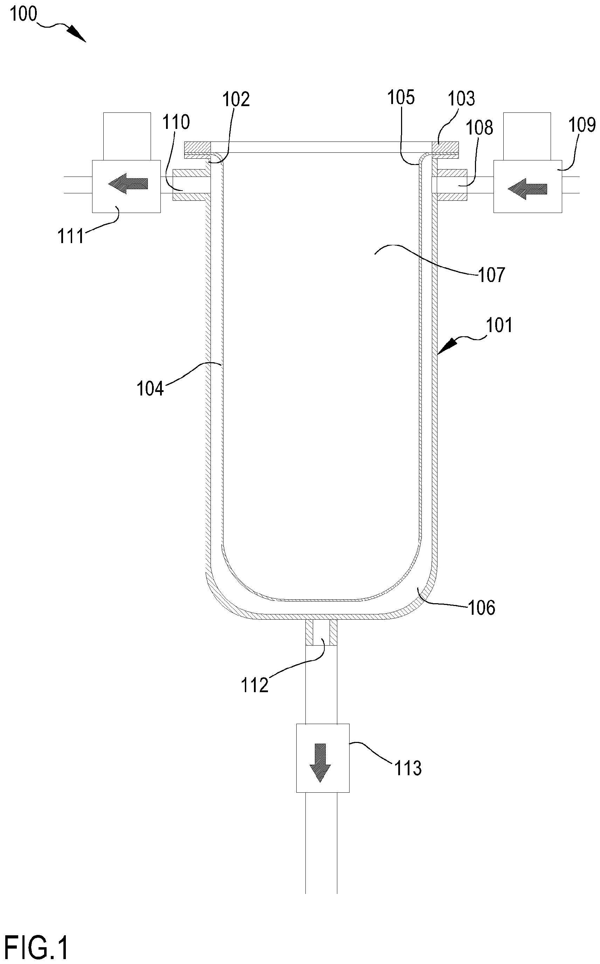

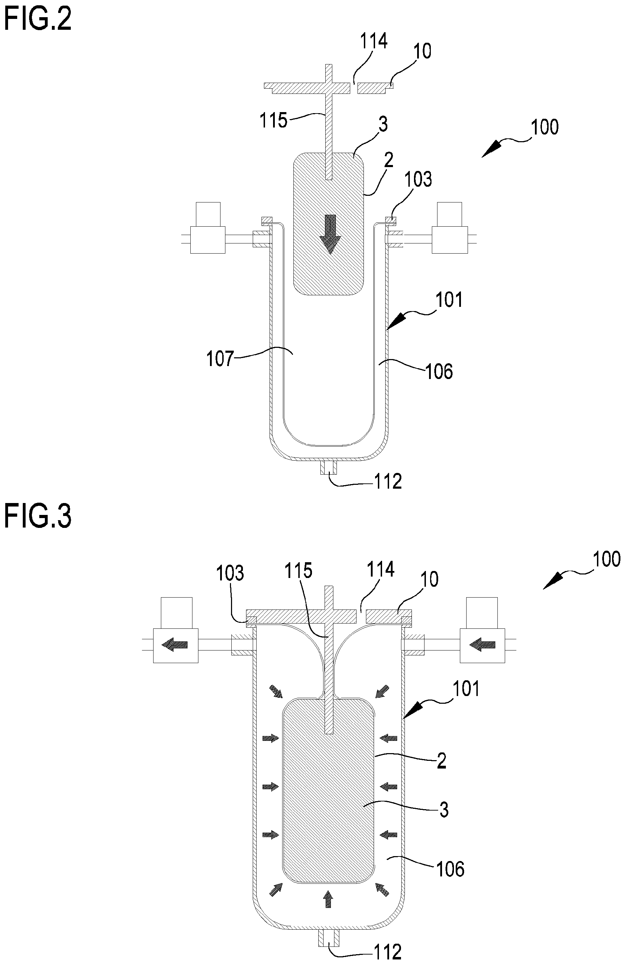

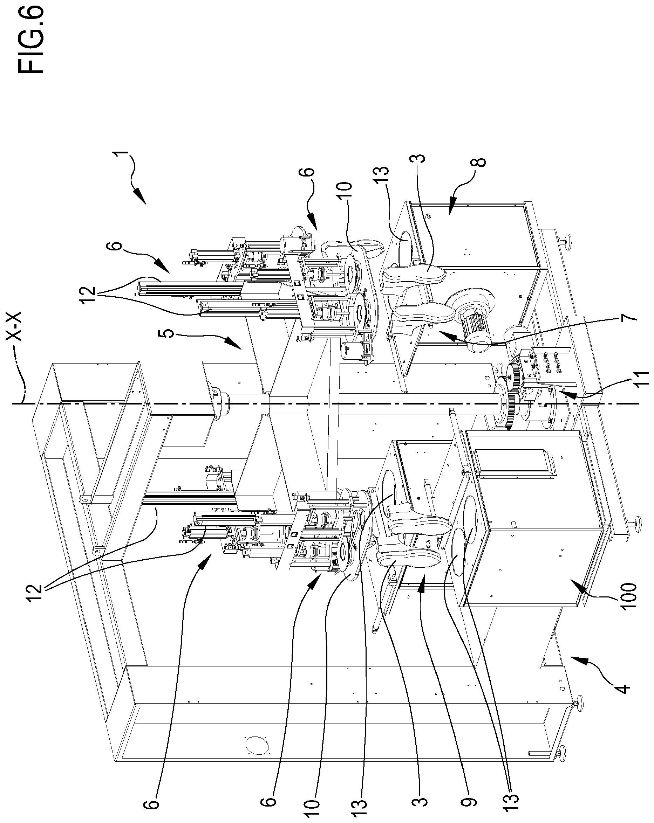

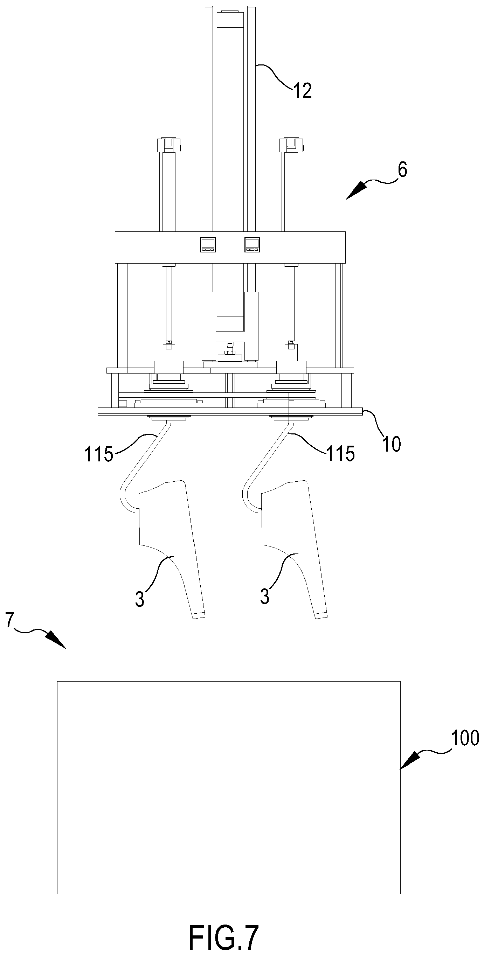

Such description will be set forth hereinbelow with reference to the enclosed drawings, provided as a non-limiting example in which:
▪ figure 1 is a sectional view of a device for cooling semi-finished products in accordance with the present invention;
▪ figures 2 to 5 illustrate respective operating steps for the device of figure 1 ;
▪ figure 6 is an overall perspective view of an apparatus for thermo-forming and/or thermo-adhesive bonding of semi-finished products according to the present invention;
▪ figure 7 illustrates a portion of the apparatus of figure 6.

### Detailed description of one embodiment of the invention

With reference to figure 1, reference number 100 overall indicates a device for cooling semi-finished products in the field of thermo-forming and/or thermo-adhesive bonding of said semi-finished products.

The device 100 is used in apparatuses and processes configured for the thermo-forming and/or thermo-adhesive bonding of semi-finished products which essentially comprise one or more ovens in which the semi-finished products are heated until at least partial melting of the thermo-plastic or thermo-adhesive elements thereof has been achieved and one or more devices 100 according to the invention in which semi-finished products are cooled in order to determine the cross-linking of said thermo-plastic or thermo-adhesive elements and the stabilization of such semi-finished products.

An apparatus 1 for thermo-forming and/or thermo-adhesive bonding of semi-finished products 2 for the purpose, for example, of making stable three-dimensional articles is for example illustrated in figure 6. In the illustrated exemplifying but non-limiting embodiment, the produced articles are footwear or parts of footwear (e.g. uppers) obtained by means of the thermoforming and/or thermo-adhesive bonding of flexible semi-finished products 2 in sock/stocking form constituted by threads and/or fibers of woven or nonwoven type and comprising thermo-plastic or thermo-adhesive yarns. Rigid shapes 3 are used which reproduce, in reverse manner, the footwear to be formed. Each rigid shape 3 is preferably made of plastic material and is such to be able to sustain high and low temperatures and high pressures without being ruined and/or deformed. In general, the rigid shapes 3 reproduce, in reverse manner, the forms of the articles to be made (clothing articles or parts thereof, also technical/sport or medical, accessories, footwear, bags and suitcases, coverings of various type, etc.). In the illustrated example, the flexible semi-finished products 2 in sock/stocking form are fit on the respective rigid shapes 3 and subjected to a process of thermo-forming and/or thermo-adhesive bonding in the apparatus 1, as will be described hereinbelow.

The apparatus 1 comprises a frame 4 provided with a base configured to rest on the ground. The frame 4 carries a carousel conveyor 5 provided with a motorized shaft and rotatable around a main vertical axis "X-X" and carrying four support heads 6 angularly equidistant from each other by 90°. Around the shaft, four fixed stations are arranged: a loading/unloading station 7, a first heating station provided with a first oven 8, a second heating station provided with a second oven 9, a cooling station provided with a device 100. The conveyor 5 is movable, upon actuation by a main motor 11, for angular pitches of 90° in a manner such that, after each pitch, each support head 6 is situated at a respective station. Each support head 6 is therefore moved along a closed circular path, along which the four stations lie.

The four support heads 6 are identical to each other and each comprises a plate 10 and two supports (which are represented as hooks in figure 7) which are extended below the plate 10 and are configured for each to support a rigid shape 3. Once hung from the support head 6, the reference forms 3 hang below the support head 6. The entire support head 6 is mounted on the carousel conveyor 5 in a manner such that it can translate vertically on suitable guides. A main actuator 12, e.g. a pneumatic cylinder, is configured for moving the support head 6 between a lifted position and a lowered position. The support heads 6 are situated above the four fixed stations 7, 8, 9, 100.

The first oven 8 internally delimits a heating chamber configured for receiving the semi-finished product 2 arranged on the rigid shape 3 hung from the support head 6. The first oven 8 has two upper openings 13. The size of each of the upper openings 13 is such to allow the top insertion into the heating chamber of a respective rigid shape 3 hung from the support head 6. In the lifted position, the support head 6 which is situated in the first heating station is spaced from the first oven 8 in order to maintain the two rigid shapes 3 outside the heating chamber. In the lowered position, the support head 6 is close to the first oven 8 in order to maintain the two rigid shapes 3 within the heating chamber. In particular, the plate 13 of the support head 6 lies on an upper wall of the external casing 25 and sealingly closes the upper openings 13. The second oven 9 has a structure substantially identical to that of the first oven 8. The first and the second oven 8, 9 are provided with heating devices, e.g. with electrical heating elements or infrared ray emitters or pipes with nozzles connected to a vapor generator and operationally active in the heating chamber in order to introduce vapor or a mixture of overheated air and vapor into said heating chamber.

The device 100 illustrated in figure 6 also has two upper openings 13 in order to be able to insert the two rigid shapes 3 with modes analogous to that described above.

Such device 100 is schematically illustrated in figures 1 to 5. In figures 2 to 5, a rigid shape 3 is also schematically represented, on which a flexible semi-finished product 2 is enclosed/fit which is provided with the abovementioned thermo-plastic or thermo-adhesive yarns or other thermo-plastic or thermo-adhesive elements. Figures 1 - 5 also illustrate the plate 10 of the head 6 which performs the function of cover.

The device 100 comprises a rigid casing 101, e.g. metallic and possibly insulated, which in the illustrated example has a substantially cup-shaped form. The device 100 illustrated in figure 6 comprises for example two side-by-side rigid casings 101, not visible since they are enclosed in an external casing.

The rigid casing 101 has an upper access opening 102 delimited by an edge and has a flange 103 fixed on the edge. A bag 104 is arranged in the rigid casing 101. The bag 104 is closed on the lower part and has an edge thereof delimiting a respective opening 105. The edge of the bag 104 is interposed and fixed between the flange 103 and the edge of the rigid casing 101. An internal surface of the rigid casing 101 and an external surface of the bag delimit between them a first volume 106 which, during the operation of the device 100, is variable. The bag 104 delimits a second volume 107 at its own interior.

The bag 104 comprises or is defined by a gas impermeable membrane, which is flexible and elastic, for example made of rubber. In embodiment variants, the membrane can also be non-elastic, for example made of plastic or of a waterproof fabric, or made gas impermeable.

The bag 104 is configured and sized for containing a semi-finished product 2 placed on a rigid shape 3. The bag 104 is part of the device 100 and is preferably usable for a plurality of cooling cycles (i.e., preferably, it is not disposable but is only substituted when broken or worn).

The cover is configured for being abutted against the flange 103 and sealingly closing the opening 105 of the bag 104 and the access opening 102. The rigid casing 101, the flange 103, the bag 104 and the cover gas-tight close the first volume 106 and the second volume 107.

The rigid casing 101 has an inlet 108 configured to allow the inlet of a gas, e.g. air, at a first pressure P1. The inlet 108 is for example connected to a compressor and/or a pressurized gas tank, not illustrated, and comprises a pressure regulator 109 configured for regulating the pressure at the inlet of the rigid casing 101 and maintaining it substantially equal to said first pressure P1. The rigid casing 101 has an outlet 110 configured to allow the outlet of the gas at a second pressure P2 lower than the first pressure P1. The outlet 110 is for example connected to a discharge, e.g. into the environment, and comprises a pressure regulator 111 configured for regulating the pressure at the outlet of the rigid casing 101 and maintaining it substantially equal to said second pressure P2. The inlet 108 and the outlet 110 are in fluid communication with the first volume 106. The first pressure P1 at the inlet is for example equal to 4 bar and the second pressure P2 at the outlet is for example equal to 2 bar.

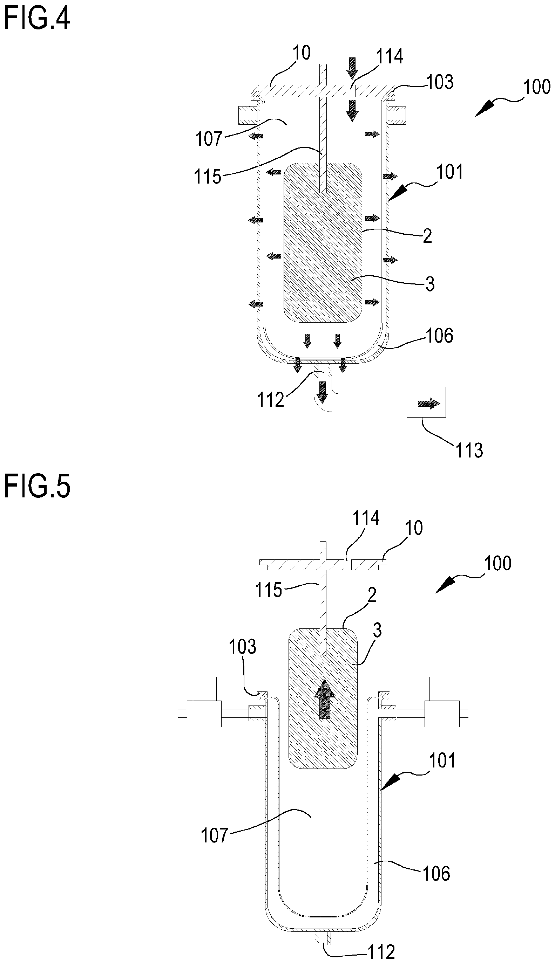

The rigid casing 101 has an auxiliary outlet 112 arranged on a bottom of the rigid casing 101. The auxiliary outlet 112 is recloseable by means of for example a valve, not illustrated, and is connected by a suction unit 113, e.g. of Venturi type. Through the cover, an auxiliary inlet 114 (figure 4) is also obtained which, when the cover is correctly mounted on the flange 103, is communicating with the second volume 107, i.e. with the interior of the bag 106. Also the auxiliary inlet 114 is recloseable by means of for example a valve, not illustrated. The auxiliary inlet 114 is connected for example to a compressor, not illustrated, in order to allow the inlet of pressurized gas, as will be explained hereinbelow.

The cover comprises a support 115 to which the rigid shape 3 is constrained or constrainable, a semi-finished product 2 being placed on such shape 3. The support 115 is configured for being placed, together with the rigid shape 3 and with the semi-finished product 2, in the second volume 107 when the cover closes the access opening 102 (as is visible in figures 3 and 4). In the non-limiting embodiment illustrated in figures 2 to 5, the support has been represented as a rod that is extended from the cover and carries, at its own distal end, the rigid shape 3 on which the semi-finished product 2 is fit. In the embodiment illustrated in figure 7, the cover comprises two supports 115 defined by respective hooks, at which two rigid shapes 3 are hung.

The apparatus 1 comprises an electronic control unit, not illustrated, operatively connected to different elements in order to drive and/or control, e.g. in an automatic or semi-automatic manner, the operation of the apparatus 1 itself, also in accordance with the process of thermo-forming and/or thermo-adhesive bonding according to the invention.

The electronic control unit is in particular connected to control devices in turn operationally coupled to the inlet 108 (in particular to the pressure regulator 109), to the outlet 110 (in particular to the pressure regulator 111), to the auxiliary outlet 112 (in particular to the suction unit 113), to the auxiliary inlet 114 (in particular to the compressor) of the rigid casing 101 in order to drive/control the device 100 for cooling semi-finished products and execute the procedure described below and also in accordance with the method according to the invention.

With reference to figure 6 and to figure 7, two flexible semi-finished products 2 in sock/stocking form are fit on respective two rigid shapes 3 and hung by an operator on the hooks of a support head 6 when this is situated in the loading/unloading station 7. The carousel conveyor 5 rotates and carries the two rigid shapes 3 above the first oven 8. The support head 6 is then lowered in order to introduce the two rigid shapes 3 with the respective semi-finished products 2 in the first oven 8, in which a first heating is executed. At the end of the first heating, the support head 6 is then lifted in order to remove the two rigid shapes 3 with the respective semi-finished products 2 from the first oven 8. The carousel conveyor 5 rotates and carries the two rigid shapes 3 above the second oven 9. The support head 6 is then lowered in order to introduce the two rigid shapes 3 with the respective semi-finished products 2 into the second oven 9, in which a second heating is executed. At the end of the second heating, the thermo-plastic or thermo-adhesive yarns of the semi-finished products 2 are at least partially molten. The support head 6 is once again lifted so as to remove the two rigid shapes 3 with the respective semi-finished products 2 from the second oven 9. In non-illustrated embodiment variants, there may only be one oven/heating.

Preferably, the heating is obtained by means of the abovementioned vapor (or mixture of overheated air and vapor) which comes into direct contact with the semi-finished product (which is not enclosed in any bag in this step) and ensures a uniform heating.

The carousel conveyor 5 rotates and carries the two rigid shapes 3 above the device 100 for cooling semi-finished products. The support head 6 is lowered so as to insert each of the rigid shapes 3 in a respective upper opening 13 and within a respective bag 104 and a respective rigid casing 101, as schematically illustrated in figure 2 in which only one rigid shape 3 is illustrated. The plate/cover 10 comes to abut against the flange 103, hermetically gas-tight closing the first volume 106 and the second volume 107 (figure 3).

In this step, the pressure within the bag 104, i.e. in the second volume 107, and also the pressure in the first volume 106, are equal to the ambient pressure, i.e. to about 1 bar.

At this point, the control devices drive the pressure regulator 109 at the inlet and the pressure regulator 111 at the outlet so as to introduce air at the first pressure P1 through the inlet 108 and simultaneously discharge air at the second pressure P2, lower than the first pressure P1, through the outlet 110. In this manner, one generates an expansion and a cooling of the air contained within the first volume 106 and hence a cooling of the bag 104 and of the semi-finished product 2. For example, the air contained within the first volume 106 is brought to a temperature of 5 °C.

During such operation, the air contained in the first volume 106 is at a third pressure P3 equal to the difference between the first pressure P1 and the second pressure P2. Such third pressure P3 is regulated so as to be higher than the pressure within the bag 104, i.e. the ambient pressure, which we define fourth pressure P4. In this manner, the bag 104 is pressed in a uniform manner against the semi-finished product 2 which in turn presses against the respective rigid shape 3 and is not deformed. If the bag 104 is elastic, this is adapted to varying the second volume 107 and perfectly adheres to the semi-finished product 2 without forming folds. It is also possible that the bag 104 is not elastic but is formed by a membrane so thin that the micro-folds that it forms when it adheres to the semi-finished product 2 still ensure a uniform compression of the same.

Possible pressure values are reported in the following Table 1.

**Table 1**

| Pressures | |
|---|---|
| P1 | 4 bar |
| P2 | 2 bar |
| P3 = P1 - P2 | 2 bar |
| P4 | 1 bar (Patm) |
| P3 - P4 | 1 bar |

With these values, the semi-finished product 2 is pressed with a pressure of about 1 Kg/cm².

Such cooling and compression determine the controlled cross-linking of the thermo-plastic or thermo-adhesive yarns and the stabilization of the semi-finished product 2.

For example, it is provided to introduce the air at the first pressure P1 through the inlet 108 and to discharge it at the second pressure P2 through the outlet 110 for a cooling time of 40 s.

In addition, it can be provided to close the inlet 108 and the outlet 110 in order to maintain said third pressure P3 in the first volume 106 and continue to press the bag 104 against the semi-finished product 2, e.g. for a stay time of 40 s.

In addition, also a flow rate of the air through the inlet 108 and the outlet 110 can be regulated in order to control the cooling. For example, such flow rate is comprised between 25 L/min and 50 L/min.

The values of the pressures and of the flow rates and the times are regulated/controlled so as to obtain the desired cooling and the desired compression of the semi-finished product 2, i.e. the controlled cross-linking of the thermo-plastic yarns.

Once the desired cooling is obtained, the bag 104 is detached from the semi-finished product 2, for example by canceling the pressure difference P3 - P4. For such purpose, it is possible to close the inlet 108 and the outlet 110 and open the auxiliary outlet 112 of the rigid casing 101, possibly by suctioning the air contained in the first volume 106 by means of the suction unit 113. In addition, it can be provided to introduce air at a pressure higher than the atmospheric pressure through the auxiliary inlet 114 and directly into the bag 104 (figure 4).

At this point, the support head 6 is lifted in order to remove the two rigid shapes 3 with the respective semi-finished products 2 from the device 100 (as schematically represented in figure 5 with reference to a single rigid shape 3). The carousel conveyor 5 rotates and carries the two rigid shapes 3 once again into the loading/unloading station 7 where the operator can remove them from the respective support head 6 in order to then remove the stabilized (thermo-formed and/or thermo-adhesive bonded) semi-finished products 2 from the respective rigid shapes 3.

In further embodiments that are not illustrated in detail, the semi-finished product itself or parts thereof is/are rigid, so that it is not necessary to employ the rigid shapes 3. For example, the rigid semi-finished product is mounted on the apparatus 1 in order to be glued thereon by means of thermo-adhesive bonding of further portions and/or layers.

## Claims

1. Device for cooling semi-finished products in the field of thermo-forming and/or thermo-adhesive bonding of said semi-finished products, comprising:
a rigid casing (101) with at least one inlet (108) and at least one outlet (110), wherein the inlet (108) is configured to allow the inlet of a gas at a first pressure (P1), wherein the outlet (110) is configured to allow the outlet of the gas at a second pressure (P2) lower than the first pressure (P1);
an auxiliary casing (104) impermeable to said gas and placed inside the rigid casing (101); wherein a first volume (106) is delimited between the rigid casing (101) and the auxiliary casing (104); wherein a second volume (107) is delimited inside the auxiliary casing (104); wherein the inlet (108) and the outlet (110) are in fluid communication with the first volume (106); wherein the auxiliary casing (104) is configured to contain a semi-finished product (2) comprising at least one thermo-plastic or thermo-adhesive element in an at least partially molten state;
control devices operationally coupled to the input (108) and to the output (110) and configured to perform the following procedure: introducing the gas at the first pressure (P1) through the inlet (108) and discharging the gas at the second pressure (P2) through the outlet (110) in order to generate an expansion and cooling of the gas contained within the first volume (106), to cool the auxiliary casing (104) and the semi-finished product (2) and to determine the cross-linking of the thermo-plastic or thermo-adhesive element.

2. Device according to claim 1, wherein the auxiliary casing (104) is a bag containing a flexible membrane; wherein the first volume (106) is at a third pressure (P3) equal to the difference between the first pressure (P1) and the second pressure (P2) and wherein the second volume (107) is at a fourth pressure (P4) lower than the third pressure (P3) so as to press the bag against the semi-finished product (2).

3. Device according to claim 2, wherein the procedure comprises: closing the inlet (108) and the outlet (110) to maintain the third pressure (P3) in the first volume (106) and continuing to press the bag against the semi-finished product (2).

4. Device according to claim 1, 2 or 3, comprising a pressurized gas source connected or connectable to the inlet (108) or wherein the inlet (108) is connected or connectable to a pressurized gas source.

5. Device according to claim 4, wherein the device (100) comprises a pressure regulator (109) operationally coupled to the inlet (108) and/or a pressure regulator (111) operationally coupled to the outlet (110).

6. Device according to one of the claims 2 or 3 or according to one of the claims 4 or 5 when claim 4 depends on claim 2, wherein the rigid casing (101) has an auxiliary outlet (112); and/or wherein an auxiliary inlet (114) is communicating with the second volume (107) and is configured to allow the gas inlet at a pressure equal to or greater than the third pressure (P3); wherein the control devices are operationally coupled to said auxiliary outlet (112) and/or to said auxiliary input (114); wherein the procedure comprises: opening the auxiliary outlet (112) and/or the auxiliary inlet (114) to cause the bag to detach from the semi-finished product (2).

7. Device according to claim 6, wherein the auxiliary output (112) is connected to a suction unit (113).

8. Device according to one of claims from 1 to 7, wherein the rigid casing (101) has an access opening (102), wherein an edge of the auxiliary casing (104) is constrained to an edge of said access opening (102); wherein the rigid casing (101) comprises a cover (10) configured to close the access opening (102) and to gas-tight close the first volume (106) and the second volume (107).

9. Device according to claim 8, wherein the cover (10) comprises a support (115) for the semi-finished product (2) configured to be placed in the second volume (106) when the cover (10) closes the access opening (102).

10. Apparatus for thermo-forming and/or thermo-adhesive bonding of semi-finished products, comprising:
▪ a loading/unloading station (7);
▪ at least one oven (8, 9) with at least one heating chamber;
▪ at least one device (100) according to at least one of the claims 1 to 9;
▪ a conveyor (5) comprising at least one support head (6) configured to support at least one semi-finished product (2) comprising at least one thermo-plastic or thermo-adhesive element;
wherein the conveyor (5) is movable in relation to the loading/unloading station (7), to said at least one oven (8, 9), to said at least one device (100) to arrange in sequence the semi-finished product (2) in the loading/unloading station (7), in the heating chamber of the oven (8, 9), in the auxiliary casing (104) of the device (100).

11. Method for cooling semi-finished products in the field of thermo-forming and/or thermo-adhesive bonding of said semi-finished products, comprising:
▪ placing a semi-finished product (2), comprising at least one thermo-plastic or thermo-adhesive element in an at least partially molten state, in an auxiliary casing (104), which in turn is placed in a rigid casing (101); wherein the auxiliary casing (104) is gas impermeable; wherein a first volume (106) is delimited between the rigid casing (101) and the auxiliary casing (104); wherein a second volume (107) is delimited inside the auxiliary casing (104);
▪ introducing a gas at a first pressure (P1) through an inlet (108) into the first volume (106) and discharging said gas at a second pressure (P2) through an outlet (110) from the first volume (106), wherein the second pressure (P2) is lower than the first pressure (P1), in order to generate an expansion and cooling of the gas contained within the first volume (106), to cool the auxiliary casing (104) and the semi-finished product (2) and to determine a cross-linking of the thermo-plastic or thermo-adhesive element.

12. Method according to claim 11, wherein the auxiliary casing (104) is a bag comprising a flexible membrane; wherein the method comprises:
▪ maintaining the first volume (106) at a third pressure (P3) equal to the difference between the first pressure (P1) and the second pressure (P2); wherein the second volume (107) is at a fourth pressure (P4) lower than the third pressure (P3) so as to press the bag against the semi-finished product (2).

13. Method according to claim 12, comprising: closing the inlet (108) and the outlet (110) to maintain the third pressure (P3) in the first volume (106) and continuing to press the bag against the semi-finished product (2).

14. Method according to claim 12 or 13, comprising:
▪ opening an auxiliary outlet (112) of the rigid casing (101) and/or an auxiliary inlet (114) communicating with the second volume (107) to cause the bag to detach from the semi-finished product (2);
▪ removing the semi-finished product (2) from the bag.

15. Process for thermo-forming and/or thermo-adhesive bonding of semi-finished products, comprising:
▪ preparing at least one semi-finished product (2) comprising at least one thermo-plastic or thermo-adhesive element;
▪ heating the semi-finished product (2) in an oven (8, 9) until at least partial melting of the thermo-plastic or thermo-adhesive element is achieved;
▪ cooling the semi-finished product (2) according to the method of at least one of the claims 11 to 14.

## Patentansprüche

1. Vorrichtung zum Kühlen von Halbfertigprodukten im Bereich des Thermoformens und/oder des Thermoklebens der Halbfertigprodukte, umfassend:
ein starres Gehäuse (101) mit mindestens einem Einlass (108) und mindestens einem Auslass (110), wobei der Einlass (108) so gestaltet ist, dass er den Einlass eines Gases mit einem ersten Druck (P1) ermöglicht, wobei der Auslass (110) so gestaltet ist, dass er den Auslass des Gases mit einem zweiten Druck (P2) ermöglicht, der niedriger als der erste Druck (P1) ist;
ein Hilfsgehäuse (104), das für das Gas undurchlässig ist und innerhalb des starren Gehäuses (101) angeordnet ist; wobei ein erstes Volumen (106) zwischen dem starren Gehäuse (101) und dem Hilfsgehäuse (104) abgegrenzt ist; wobei ein zweites Volumen (107) innerhalb des Hilfsgehäuses (104) abgegrenzt ist; wobei der Einlass (108) und der Auslass (110) in Fluidverbindung mit dem ersten Volumen (106) stehen; wobei das Hilfsgehäuse (104) dazu ausgerichtet ist, ein Halbfertigprodukt (2) zu enthalten, das mindestens ein thermoplastisches oder thermoklebendes Element in einem zumindest teilweise geschmolzenen Zustand umfasst;
Steuervorrichtungen, die operativ mit dem Eingang (108) und dem Ausgang (110) gekoppelt und so gestaltet sind, dass sie das folgende Verfahren durchführen:
Einleiten des Gases mit dem ersten Druck (P1) durch den Einlass (108) und Ausleiten des Gases mit dem zweiten Druck (P2) durch den Auslass (110), um eine Ausdehnung und Abkühlung des in dem ersten Volumen (106) enthaltenen Gases zu erreichen, das Hilfsgehäuse (104) und das Halbfertigprodukt (2) zu kühlen und die Vernetzung des thermoplastischen oder thermoklebenden Elements zu bestimmen.

2. Vorrichtung nach Anspruch 1, wobei das Hilfsgehäuse (104) ein Beutel ist, der eine flexible Membran enthält; wobei das erste Volumen (106) einen dritten Druck (P3) aufweist, der gleich der Differenz zwischen dem ersten Druck (P1) und dem zweiten Druck (P2) ist, und wobei das zweite Volumen (107) einen vierten Druck (P4) aufweist, der niedriger als der dritte Druck (P3) ist, um den Beutel gegen das Halbfertigprodukt (2) zu pressen.

3. Vorrichtung nach Anspruch 2, wobei das Verfahren umfasst: Schließen des Einlasses (108) und des Auslasses (110), um den dritten Druck (P3) im ersten Volumen (106) aufrechtzuerhalten und den Beutel weiterhin gegen das Halbfertigprodukt (2) zu pressen.

4. Vorrichtung nach Anspruch 1, 2 oder 3, umfassend eine Druckgasquelle, die mit dem Einlass (108) verbunden oder verbindbar ist, oder wobei der Einlass (108) mit einer Druckgasquelle verbunden oder verbindbar ist.

5. Vorrichtung nach Anspruch 4, wobei die Vorrichtung (100) einen Druckregler (109) umfasst, der operativ mit dem Einlass (108) verbunden ist und/oder einen Druckregler (111), der operativ mit dem Auslass (110) verbunden ist.

6. Vorrichtung nach einem der Ansprüche 2 oder 3 oder nach einem der Ansprüche 4 oder 5, wenn Anspruch 4 von Anspruch 2 abhängt, wobei das starre Gehäuse (101) einen Hilfsauslass (112) aufweist; und/oder wobei ein Hilfseinlass (114) mit dem zweiten Volumen (107) in Verbindung steht und so gestaltet ist, dass er den Gaseinlass bei einem Druck ermöglicht, der gleich oder größer als der dritte Druck (P3) ist; wobei die Steuervorrichtungen operativ mit dem Hilfsauslass (112) und/oder dem Hilfseinlass (114) gekoppelt sind; wobei das Verfahren umfasst: Öffnen des Hilfsauslasses (112) und/oder des Hilfseinlasses (114), um zu bewirken, dass sich der Beutel von dem Halbfertigprodukt (2) löst.

7. Vorrichtung nach Anspruch 6, wobei der Hilfsauslass (112) mit einer Saugeinheit (113) verbunden ist.

8. Vorrichtung nach einem der Ansprüche 1 bis 7, wobei das starre Gehäuse (101) eine Zugangsöffnung (102) aufweist, wobei eine Kante des Hilfsgehäuses (104) auf eine Kante der Zugangsöffnung (102) beschränkt ist; wobei das starre Gehäuse (101) eine Abdeckung (10) umfasst, die dazu ausgerichtet ist, die Zugangsöffnung (102) zu verschließen und das erste Volumen (106) und das zweite Volumen (107) gasdicht zu verschließen.

9. Vorrichtung nach Anspruch 8, wobei die Abdeckung (10) einen Träger (115) für das Halbfertigprodukt (2) umfasst, der so gestaltet ist, dass er in dem zweiten Volumen (106) platziert wird, wenn die Abdeckung (10) die Zugangsöffnung (102) verschließt.

10. Vorrichtung zum Thermoformen und/oder Thermokleben von Halbfertigprodukten, umfassend:
▪ eine Be-/Entladestation (7);
▪ mindestens einen Ofen (8, 9) mit mindestens einer Heizkammer;
▪ mindestens eine Vorrichtung (100) nach mindestens einem der Ansprüche 1 bis 9;
▪ einen Förderer (5) der mindestens einen Trägerkopf (6) umfasst, der dazu ausgerichtet ist, mindestens ein Halbfertigprodukt (2) mit mindestens einem thermoplastischen oder thermoklebenden Element zu tragen;
wobei der Förderer (5) in Bezug auf die Be-/Entladestation (7), den mindestens einen Ofen (8, 9) und die mindestens eine Vorrichtung (100) beweglich ist, um das Halbfertigprodukt (2) nacheinander in der Be-/Entladestation (7), in der Heizkammer des Ofens (8, 9) und im Hilfsgehäuse (104) der Vorrichtung (100) anzuordnen.

11. Verfahren zum Kühlen von Halbfertigprodukten im Bereich des Thermoformens und/oder des Thermoklebens dieser Halbfertigprodukte, umfassend:
▪ Anordnen eines Halbfertigprodukts (2), das mindestens ein thermoplastisches oder thermoklebendes Element in einem zumindest teilweise geschmolzenen Zustand umfasst, in einem Hilfsgehäuse (104), das seinerseits in einem starren Gehäuse (101) angeordnet ist; wobei das Hilfsgehäuse (104) gasundurchlässig ist; wobei ein erstes Volumen (106) zwischen dem starren Gehäuse (101) und dem Hilfsgehäuse (104) abgegrenzt ist; wobei ein zweites Volumen (107) im Inneren des Hilfsgehäuses (104) abgegrenzt ist;
▪ Einleiten eines Gases mit einem ersten Druck (P1) durch einen Einlass (108) in das erste Volumen (106) und Ablassen des Gases mit einem zweiten Druck (P2) durch einen Auslass (110) aus dem ersten Volumen (106), wobei der zweite Druck (P2) niedriger ist als der erste Druck (P1), um eine Ausdehnung und Abkühlung des in dem ersten Volumen (106) enthaltenen Gases zu erreichen, das Hilfsgehäuse (104) und das Halbfertigprodukt (2) zu kühlen und eine Vernetzung des thermoplastischen oder thermoklebenden Elements zu bestimmen.

12. Verfahren nach Anspruch 11, wobei das Hilfsgehäuse (104) ein Beutel ist, der eine flexible Membran umfasst; wobei das Verfahren umfasst:
▪ Halten des ersten Volumens (106) auf einem dritten Druck (P3), der gleich der Differenz zwischen dem ersten Druck (P1) und dem zweiten Druck (P2) ist; wobei das zweite Volumen (107) einen vierten Druck (P4) aufweist, der niedriger als der dritte Druck (P3) ist, um den Beutel gegen das Halbfertigprodukt (2) zu pressen.

13. Verfahren nach Anspruch 12, umfassend: Schließen des Einlasses (108) und des Auslasses (110), um den dritten Druck (P3) in dem ersten Volumen (106) aufrechtzuerhalten und den Beutel weiterhin gegen das Halbfertigprodukt (2) zu pressen.

14. Verfahren nach Anspruch 12 oder 13, umfassend:
▪ Öffnen eines Hilfsauslasses (112) des starren Gehäuses (101) und/oder eines Hilfseinlasses (114), der mit dem zweiten Volumen (107) in Verbindung steht, um zu bewirken, dass sich der Beutel von dem Halbfertigprodukt (2) löst;
▪ Entfernen des Halbfertigprodukts (2) von dem Beutel.

15. Verfahren zum Thermoformen und/oder Thermokleben von Halbfertigprodukten, umfassend:
▪ Herstellen mindestens eines Halbfertigprodukts (2), das mindestens ein thermoplastisches oder thermoklebendes Element enthält;
▪ Erhitzen des Halbfertigprodukts (2) in einem Ofen (8, 9), bis das thermoplastische oder thermoklebende Element zumindest teilweise geschmolzen ist;
▪ Abkühlen des Halbfertigprodukts (2) nach dem Verfahren von mindestens einem der Ansprüche 11 bis 14.

## Revendications

1. Dispositif de refroidissement de produits semi-finis dans le domaine de la liaison par thermoformage et/ou thermoadhésive desdits produits semi-finis, comprenant :
un boîtier rigide (101) ayant au moins un orifice d'entrée (108) et au moins un orifice de sortie (110), l'orifice d'entrée (108) étant conçu pour permettre l'entrée d'un gaz à une première pression (P1), l'orifice de sortie (110) étant conçu pour permettre la sortie du gaz à une seconde pression (P2) inférieure à la première pression (P1) ;
un boîtier auxiliaire (104) imperméable audit gaz et placé à l'intérieur du boîtier rigide (101); un premier volume (106) étant délimité entre le boîtier rigide (101) et le boîtier auxiliaire (104) ; un second volume (107) étant délimité à l'intérieur du boîtier auxiliaire (104) ; l'orifice d'entrée (108) et l'orifice de sortie (110) se trouvant en communication fluidique avec le premier volume (106) ; le boîtier auxiliaire (104) étant conçu pour contenir un produit semi-fini (2) comprenant au moins un élément thermoplastique ou thermoadhésif sous un état au moins partiellement fondu ;
des dispositifs de commande fonctionnellement reliés à l'orifice d'entrée (108) et à l'orifice de sortie (110) et conçus pour effectuer la procédure suivante :
introduction du gaz à la première pression (P1) à travers l'orifice d'entrée (108) et évacuation du gaz à la seconde pression (P2) à travers l'orifice de sortie (110) afin de générer une expansion et le refroidissement du gaz contenu à l'intérieur du premier volume (106), pour refroidir le boîtier auxiliaire (104) et le produit semi-fini (2) et pour déterminer la réticulation de l'élément thermoplastique ou thermoadhésif.

2. Dispositif selon la revendication 1, le boîtier auxiliaire (104) étant un sac contenant une membrane souple; le premier volume (106) se trouvant à une troisième pression (P3) égale à la différence entre la première pression (P1) et la seconde pression (P2) et le second volume (107) se trouvant à une quatrième pression (P4) inférieure à la troisième pression (P3) afin de presser le sac contre le produit semi-fini (2).

3. Dispositif selon la revendication 2, la procédure comprenant : la fermeture de l'orifice d'entrée (108) et de l'orifice de sortie (110) pour maintenir la troisième pression (P3) dans le premier volume (106) et la poursuite de la compression du sac contre le produit semi-fini (2).

4. Dispositif selon la revendication 1, 2 ou 3, comprenant une source de gaz sous pression reliée ou pouvant être reliée à l'orifice d'entrée (108) ou l'orifice d'entrée (108) étant relié ou pouvant être relié à une source de gaz sous pression.

5. Dispositif selon la revendication 4, le dispositif (100) comprenant un régulateur de pression (109) fonctionnellement relié à l'orifice d'entrée (108) et/ou un régulateur de pression (111) fonctionnellement accouplé à l'orifice de sortie (110).

6. Dispositif selon l'une des revendications 2 ou 3 ou selon l'une des revendications 4 ou 5 lorsque la revendication 4 dépend de la revendication 2, le boîtier rigide (101) ayant un orifice de sortie auxiliaire (112) ; et/ou un orifice d'entrée auxiliaire (114) se trouvant en communication avec le second volume (107) et étant conçu pour permettre l'entrée de gaz à une pression supérieure ou égale à la troisième pression (P3) ; les dispositifs de commande étant fonctionnellement accouplés audit orifice de sortie auxiliaire (112) et/ou audit orifice d'entrée auxiliaire (114) ; la procédure comprenant: l'ouverture de l'orifice de sortie auxiliaire (112) et/ou de l'orifice d'entrée auxiliaire (114) pour amener le sac à se détacher du produit semi-fini (2).

7. Dispositif selon la revendication 6, l'orifice de sortie auxiliaire (112) étant reliée à une unité d'aspiration (113).

8. Dispositif selon l'une des revendications de 1 à 7, le boîtier rigide (101) ayant une ouverture d'accès (102), un bord du boîtier auxiliaire (104) étant contraint à un bord de ladite ouverture d'accès (102) ; le boîtier rigide (101) comprenant un couvercle (10) conçu pour fermer l'ouverture d'accès (102) et pour l'étanchéité au gaz près du premier volume (106) et du second volume (107).

9. Dispositif selon la revendication 8, le couvercle (10) comprenant un support (115) pour le produit semi-fini (2) conçu pour être placé dans le second volume (106) lorsque le couvercle (10) ferme l'ouverture d'accès (102).

10. Appareil de liaison par thermoformage et/ou thermoadhésive de produits semi-finis, comprenant :
▪ un poste de charge/déchargement (7) ;
▪ au moins un four (8, 9) ayant au moins une chambre de chauffage ;
▪ au moins un dispositif (100) selon au moins l'une des revendications 1 à 9;
▪ un dispositif de transport (5) comprenant au moins une tête de support (6) conçue pour supporter au moins un produit semi-fini (2) comprenant au moins un élément thermoplastique ou thermoadhésif ;
le dispositif de transport (5) étant mobile en relation au poste de charge/déchargement (7), par rapport audit au moins un four (8, 9), audit au moins un dispositif (100) pour la disposition en séquence du produit semi-fini (2) dans le poste de charge/déchargement (7), dans la chambre de chauffage du four (8, 9), dans le boîtier auxiliaire (104) du dispositif (100).

11. Procédé de refroidissement de produits semi-finis dans le domaine de la liaison par thermoformage et/ou thermoadhésive desdits produits semi-finis, comprenant :
▪ la mise en place d'un produit semi-fini (2), comprenant au moins un élément thermoplastique ou thermoadhésif sous un état au moins partiellement fondu, dans un boîtier auxiliaire (104), qui à son tour est placé dans un boîtier rigide (101); le boîtier auxiliaire (104) étant imperméable au gaz; un premier volume (106) étant délimité entre le boîtier rigide (101) et le boîtier auxiliaire (104) ; un second volume (107) étant délimité à l'intérieur du boîtier auxiliaire (104) ;
▪ introduction d'un gaz à une première pression (P1) à travers un orifice d'entrée (108) dans le premier volume (106) et évacuation dudit gaz à une seconde pression (P2) à travers un orifice de sortie (110) depuis le premier volume (106), la seconde pression (P2) étant inférieure à la première pression (P1), afin de générer une expansion et le refroidissement du gaz contenu à l'intérieur du premier volume (106), pour refroidir le boîtier auxiliaire (104) et le produit semi-fini (2) et pour déterminer une réticulation de l'élément thermoplastique ou thermoadhésif.

12. Procédé selon la revendication 11, le boîtier auxiliaire (104) étant un sac comprenant une membrane souple ; le procédé comprenant :
▪ le maintien du premier volume (106) à une troisième pression (P3) égale à une différence entre la première pression (P1) et la seconde pression (P2) ; le second volume (107) se trouvant à une quatrième pression (P4) inférieure à la troisième pression (P3) afin de comprimer le sac contre le produit semi-fini (2).

13. Procédé selon la revendication 12, comprenant: la fermeture de l'orifice d'entrée (108) et de l'orifice de sortie (110) pour maintenir la troisième pression (P3) dans le premier volume (106) et poursuivre la compression du sac contre le produit semi-fini (2).

14. Procédé selon la revendication 12 ou 13, comprenant :
▪ l'ouverture d'un orifice de sortie auxiliaire (112) du boîtier rigide (101) et/ou d'un orifice d'entrée auxiliaire (114) communiquant avec le second volume (107) pour amener le sac à se détacher du produit semi-fini (2) ;
▪ le retrait du produit semi-fini (2) du sac.

15. Procédé de liaison par thermoformage et/ou thermoadhésive de produits semi-finis, comprenant :
▪ la préparation d'au moins un produit semi-fini (2) comprenant au moins un élément thermoplastique ou thermoadhésif ;
▪ le chauffage du produit semi-fini (2) dans un four (8, 9) jusqu'à ce que la fusion au moins partielle de l'élément thermoplastique ou thermoadhésif soit atteinte ;
▪ refroidissement du produit semi-fini (2) selon le procédé selon au moins l'une des revendications 11 à 14.
